# EUROPEAN PATENT APPLICATION

(11) **EP 1 878 489 A2**
(43) Date of publication of application: **16.01.2008**
(21) Application number: 07013260.0
(22) Date of filing: 06.07.2007
(51) Int. Cl.: B01J 2/16, B01D 46/00

(54) **Fluidized bed apparatus and filter washing method for fluidized bed apparatus**

(30) Priority: 10.07.2006 JP 2006189529
(71) Applicant: Freund Corporation, Tokyo 163-6034 (JP)
(72) Inventor: Yamanaka, Kuniaki, Tokyo 163-6034 (JP); Isobe, Shigemi, Tokyo 163-6034 (JP); Unosawa, Kazuomi, Tokyo 163-6034 (JP); Takei, Narimichi, Tokyo 163-6034 (JP)
(74) Representative: HOFFMANN EITLE

(57) **Abstract**

A cartridge filter 7 is vertically movably placed in a processing vessel 1 having a cylindrical profile. An ultrasonic washer 55 is fitted to the lateral wall 3a of the spray casing of the processing vessel 1. Washing liquid 56 is injected into the processing vessel 1 and the filter 7 is moved downward and immersed in the washing liquid 56. The washer 55 is activated under this condition to wash the filter 7. Since the washer 55 is arranged near the filter 7, the ultrasonic oscillation is easily transmitted to the filter 7 to efficiently remove the foreign objects adhering to the filter 7. Thus, with this arrangement, it is possible to wash the filter 7 in the processing vessel 1 without removing the filter 7 from a fluidized bed apparatus.

## Description

### BACKGROUND OF THE INVENTION

### [Field of the Invention]

The present invention relates to a fluidized bed apparatus to be used for granulation and coating of powder and particle. More particularly, the present invention relates to a fluidized bed apparatus in which the filter arranged therein for separating particulates can be washed efficiently in the apparatus.

### [Related Art Statement]

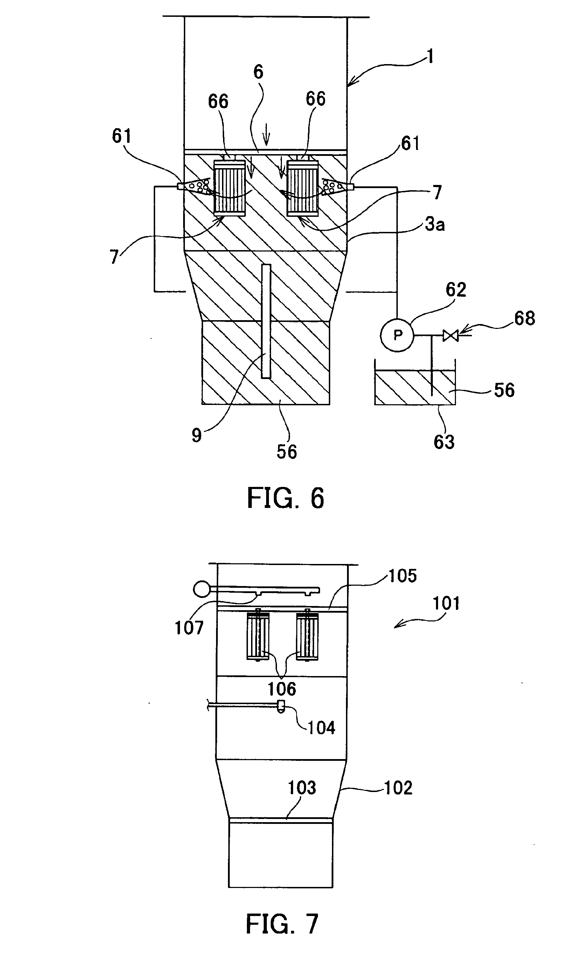

Various products are manufactured by processing fine materials such as particulate materials by way of granulation, coating, mixing, drying and so on in the field of medicines, cosmetics and foods etc. For such a processing, fluidized bed granulation, coating apparatus and other particulate processing apparatus are being widely used for the purpose of fluidizing fine materials by means of a gas flow and granulating, coating, mixing, agitating and drying them. In a fluidized bed apparatus, binding liquid, coating liquid and so on are supplied to a fluidized particulate material by means of a spray nozzle to carry out processes such as granulation and coating. FIG. 7 of the accompanying drawings schematically illustrates such a fluidized bed apparatus. Referring to FIG. 7, the fluidized bed apparatus 101 comprises a cylindrical processing vessel 102 and the object of processing such as a particulate material is fed into the inside thereof and subjected to processes such as granulation and coating.

An air-permeable perforated plate 103 that is typically formed by using a wire mesh is arranged under the vessel 102. Processing gas is supplied from below the perforated plate 103 and the object of processing is fluidized in the vessel 102 by the processing gas. A spray nozzle 104 is arranged substantially at the center of the vessel 102 for the purpose of atomizing binding liquid, coating liquid and so on. A ceiling plate 105 is arranged at an upper part of the vessel 102. The filters 106 are fitted to the ceiling plate 105. The filters 106 sort out the particulate material from the gas flow and prevent powder including fine powder and pulverulent bodies from leaking to the outside of the processing system. Cartridge type filters comprising a filter element typically made of unwoven fabric of polyester or polyamide are typically used for the filters 106. Jet nozzles 107 for backwashing the filter are arranged above the respective filters 106.

The powder adhering to the filters 106 is blown off from the filters 106 by means of pulse jets from the nozzles 107 from time to time during the ongoing process. However, it is not possible to completely blow off the adhering powder by means of a backwashing process and powder gradually accumulates to increase the resistance against the air flow. Thus, in a granulation process, the filters 106 need to be temporarily removed from the apparatus 101 and washed when the processing time exceeds a predetermined time period. Additionally, the filters 106 need to be washed when the same apparatus is operated to process particulates of different types or different binding or coating liquids are sprayed. While the filters 106 are removed from the fluidized bed apparatus 101 and washed manually in general, various automatic washing apparatus have been proposed because the manual washing operation requires human resources and time.

For example, Jpn. U.M. Appln. Laid-Open Publication No. 60-176240 describes an apparatus for lowering a filter in a fluidized bed apparatus and washing the filter by means of a lower fixed washing nozzle that is standing by and a vertically movable upper washing nozzle. Jpn. Pat. Appln. Laid-Open Publication No. 8-309130 describes a so-called pooling/washing type bag filter washing method. According to the cited Patent Document, a filtering cylinder and a fluidizing cylinder are separated from each other by means of a partition plate and a filtering chamber is put into a water-tight condition and operated as washing chamber. After injecting detergent into the filtering chamber, the filter is subjected to mechanical vertical vibrations (shaking operation) to wash the filter easily and reliably within a short period of time.

Jpn. Pat. Appln. Laid-Open Publication No. 6-262015 describes wet washing method for a filter cartridge that drives a filter to rotate for washing in addition to ultrasonic washing. With the disclosed washing method, a cartridge filter having pleats is arranged so that it can freely rotate and washing liquid is sprayed toward the outer periphery thereof from an oblique direction. Then, as a result, the filter is driven to rotate by washing liquid so that washing liquid is sprayed onto the entire surface of the filter efficiently in concentrated manner.

On the other hand, PCT Publication No. 2005-530601 describes a fluidized bed processing apparatus comprising a group of movable filters that can be selectively moved in a fluidized bed chamber. The filters for filtering process air are arranged so as to be vertically movable between a first position for filtering air and a second position for inspections and repairing operations. The apparatus is provided with a cleaning mechanism for backwashing processes and fine powder is removed by the cleaning mechanism. The filters can be removed at the second position for cleaning and replacement.

Jpn. Pat. Appln. Laid-Open Publication No. 2003-200014 relates to a filter to be used in the exhaust gas line of an automobile. It describes a washing method of immersing and washing a micro particle filter in a washing solution. The filter is separated from the exhaust gas line and decomposed. Subsequently, it is immersed and washed in a tank containing a washing solution to remove the mineral residue that clogs the filter.

However, a pooling/washing system as described in Jpn. Pat. Appln. Laid-Open Publication No. 8-309130 does not provide a satisfactory washing effect for washing the filters being used in fluidized bed apparatus and, in the long run, the filters need to be removed and washed separately outside the apparatus. The rotary washing system as described in Jpn. Pat. Appln. Laid-Open Publication No. 6-262015 can only roughly wash filters. In other words, it is not a self-completing type washing system and requires a filter-washing process to be conducted outside the apparatus. Thus, known fluidized bed apparatus require time and labor for washing the filters and such washing processes give rise to a problem of baffling efforts to improve the productivity of the apparatus. Additionally, washing systems that entail a process outside the apparatus can expose (and scatter) the detergent and the residual fine powder to the outside of the apparatus to contaminate the surrounding of the apparatus. Such a problem is particularly disadvantageous from the viewpoint of containment in drug manufacturing facilities.

In an attempt to cope with the above-identified problems, there have been proposed systems of arranging an ultrasonic washer or a bubbling washer in a fluidized bed apparatus to wash the filters and the inside of the fluidized bed apparatus simultaneously while the inside of the apparatus is filled with washing water. However, when an ultrasonic washer or a bubbling washer is arranged at the bottom section of a fluidized bed apparatus for such a system, there arises a problem that the filters arranged in an upper part of the fluidized bed apparatus cannot be washed satisfactorily because of the coverage of ultrasonic waves or bubbles. This problem is particularly remarkable in large apparatus so that a washing system using an ultrasonic washer or a bubbling washer is not feasible for large apparatus.

### SUMMARY OF THE INVENTION

Therefore, it is an object of the present invention to provide a fluidized bed apparatus comprising filters arranged therein that can be washed with ease within the apparatus without being removed from the latter and also a filter washing method to be used for fluidized bed apparatus.

In an aspect of the present invention, there is provided a fluidized bed apparatus comprising: a processing vessel having a cylindrical profile; a filter member arranged in the processing vessel so as to be immersed in washing liquid to be injected and retained in the processing vessel; and a washer fitted to the lateral wall of the processing vessel so as to be capable of washing the filter member immersed in the washing liquid.

Thus, according to the present invention, a filter member is immersed in the washing liquid that fills the inside of the processing vessel and subjected to a washing process by means of the washer fitted to the lateral wall of processing vessel. In the fluidized bed apparatus, the filter member is washed by means of the washer arranged near the filter in a washing process so that the filter member can be washed efficiently in the apparatus. Accordingly, the filter member can be washed without being taken out from the apparatus so that the number of man-hour of the washing process is reduced. Additionally, since the filter member is washed within the apparatus, the operator is or operators are not required to touch the solution of chemical agent during the washing process to improve the environment of operation.

In a fluidized bed apparatus as defined above, an ultrasonic washer for applying an ultrasonic oscillation to the washing liquid may be used for the washer. It is also possible to use a bubbling washer for supplying a bubble flow or liquid containing bubbles to the washing liquid for the washer. If such is the case, the filter member may be rotatably arranged in the processing vessel so as to be driven to rotate in the washing liquid by a bubble flow or liquid containing bubbles. Furthermore, the filter member may be vertically movably arranged in the processing vessel.

Additionally, in a fluidized bed apparatus as defined above, the processing vessel may include a filter casing in which the filter is arranged, a spray casing in which a spray nozzle for spraying liquid to an object of processing is arranged, a material container containing the object of processing and a gas feed unit for feeding processing gas to the material container and the washer may be arranged at the lateral wall of the spray casing.

A fluidized bed apparatus as defined above may further comprise a perforated plate arranged in the processing vessel so as to be displaceable between a first position where it is disposed substantially horizontally and a second position where it is inclined by a predetermined angle relative to the first position. When a washing process is executed while the perforated plate is held in an inclined state, it is possible to remove the deposit of substances insoluble to washing liquid on the perforated plate. Thus, it is possible to prevent substances insoluble to washing liquid from depositing on the perforated plate.

In another aspect of the present invention, there is provided a filter washing method in a fluidized bed apparatus including a processing vessel having a cylindrical profile and a filter member arranged in the processing vessel, said method comprising:
injecting washing liquid into the processing vessel; immersing the filter member in the washing liquid retained in the processing vessel; and washing the filter member immersed in the washing liquid by means of a washer fitted to the lateral wall of the processing vessel.

Thus, according to the present invention, a filter member is immersed in the washing liquid that fills the inside of the processing vessel and subjected to a washing process by means of the washer fitted to the lateral wall of processing vessel. In a washing process using a filter washing method according to the present invention, the filter member is washed by means of the washer arranged near the filter in a washing process so that the filter member can be washed efficiently in the apparatus. Accordingly, the filter member can be washed without being taken out from the apparatus so that the number of man-hour of the washing process is reduced. Additionally, since the filter member is washed within the apparatus, the operator is or operators are not required to touch the solution of chemical agent during the washing process to improve the environment of operation.

In a filter washing method as defined above, an ultrasonic oscillation may be applied to washing liquid from the washer to wash the filter member. Alternatively, a bubble flow may be supplied to the washing liquid from the washer to wash the filter member. With such an arrangement, the filter may be driven to rotate in the washing liquid by the bubble flow. Furthermore, the filter member may be arranged so as to be vertically movable in the processing vessel and moved to a downward position in the processing vessel while washing liquid is injected into and retained in the processing vessel so as to be immersed in the washing liquid.

Additionally, in a filter washing method as defined above, a perforated plate may be arranged in the processing vessel so as to be displaceable between a first position where it is disposed substantially horizontally and a second position where it is inclined by a predetermined angle relative to the first position and the filter member is washed when the perforated plate is displaced to the second position.

### BRIEF DESCRIPTION OF THE DRAWINGS

FIG. 1 is a schematic illustration of Embodiment 1 of the present invention, which is a fluidized bed apparatus, showing the configuration thereof;
FIG. 2 is a schematic perspective view of the material container of the fluidized bed apparatus of FIG. 1 as viewed from the screen unit side (lower side) thereof;
FIG. 3 is a schematic illustration of the screen unit of the fluidized bed apparatus of FIG. 1, showing the configuration thereof;
FIGS. 4A through 4F are schematic illustrations of the fluidized bed apparatus of FIG. 1 in different washing steps;
FIG. 5 is a schematic illustration of Embodiment 2 of the present invention, which is a fluidized bed apparatus, showing the configuration thereof;
FIG. 6 is a schematic illustration of the fluidized bed apparatus of FIG. 5, showing the filter washing process thereof; and
FIG. 7 is a schematic illustration of a known fluidized bed apparatus, showing the coefficient thereof.

### DESCRIPTION OF THE PREFERRED EMBODIMENT

Now, the present invention will be described in greater detail by referring to the accompanying drawings that illustrate preferred embodiments of the invention.

### [Embodiment 1]

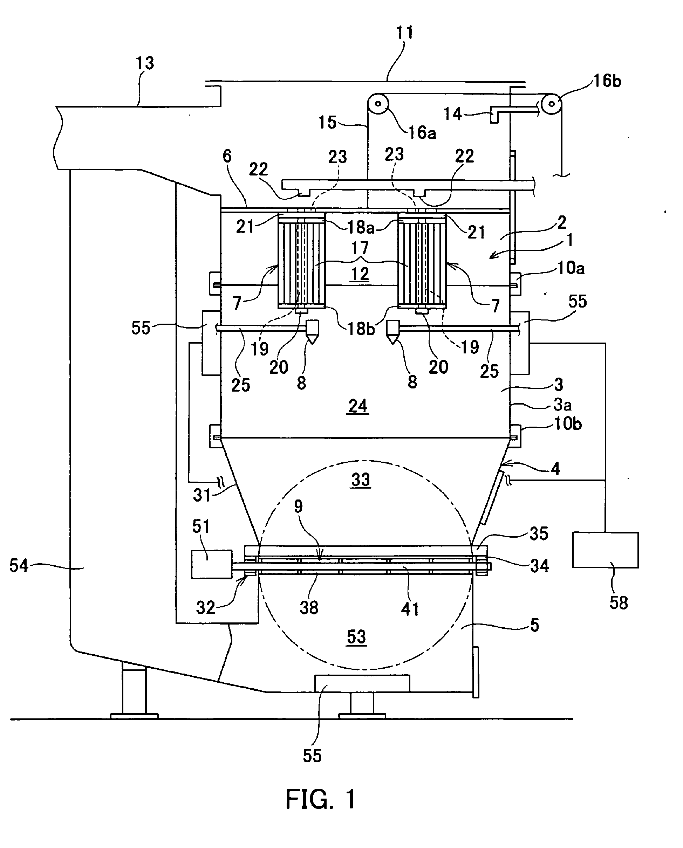

FIG. 1 is a schematic illustration of Embodiment 1 of the present invention, which is a fluidized bed apparatus. The fluidized bed apparatus of FIG. 1 comprises a processing vessel 1 having a cylindrical profile and is adapted to carry out a coating process on the surface of a particulate material. The processing vessel 1 is formed by sequentially arranging a filter casing 2, a sprayer casing 3, a material container 4 and a unit 5 from above, which are laid one on the other.

The casing 2, the casing 3 and the container 4 are connected to each other by means of cramps 10a, 10b. Adjacent ones of the casings and the container are air-tightly linked to each other typically by means of a sealing member. Alternatively, the upper one of the casings may be pushed from under and adjacent ones of the casings and the container may be air-tightly linked to each other by means of a sealing member. A ceiling plate 6 is arranged in the filter casing 2. Cartridge filters (filter members) 7 are attached to the ceiling plate 6. Spray nozzles 8 for spraying binding liquid or coating liquid onto a particulate material are arranged in the casing 3. In the container 4, a particulate material to be the object of processing is fed. A perforated plate 9 is arranged at the bottom of the container 4.

The top end of the casing 2 is closed by a roof 11. A filter chamber 12 is formed in the inside of the casing 2. An exhaust duct 13 is connected to the filter chamber 12, while a washing water supply pipe 14 is arranged at the lateral wall thereof. The disk-shaped ceiling plate 6 is contained in the filter chamber 12. The peripheral edge of the ceiling plate 6 is held in contact with the inner surface of the casing 2 and a wire 15 is fitted at an end thereof to the upper surface of the ceiling plate 6. The wire 15 is drawn out to the outside of the apparatus by way of pulleys 16a, 16b. The other end of the wire 15 is connected to a pulley (not shown) that is driven by a motor. Thus, the ceiling plate 6 can be moved up and down vertically in the casings 2, 3. As the motor is operated and the wire 15 is drawn upward, the ceiling plate 6 moves upward in the casings 2, 3. On the other hand, as the motor is operated oppositely, the tension of the wire 15 is loosened and the ceiling plate 6 moves downward in the casings 2, 3 by its own weight.

A filter member 17 that is made of unwoven polyester fabric is used for each of a pair of filters 7. The filter member 17 is produced by forming pleats in an unwoven filter fabric and shaping it to show a cylindrical profile. The longitudinal dimension of the filter member 17 is about 130 to 550 mm for a small apparatus and 220 to 1,200 mm for a large apparatus. The outer diameter of the filter member 17 is about 75 to 120 mm for a small apparatus and 200 to 325 mm for a large apparatus. End caps 18a, 18b made of stainless steel are fitted respectively to the upper and lower ends of the filter member 17. A retainer 19 also made of stainless steel is driven into the filter member 17 so as to run through the center thereof. The upper end of the retainer 19 is rigidly fitted to the ceiling plate 6, while a filter anchoring knob 20 is fitted to the lower end of the retainer 19. As the knob 20 is driven upward, the filter member 17 is rigidly secured to the ceiling plate 6, using the retainer 19 as guide. A rubber packing ring 21 is arranged between the cap 18a and the ceiling plate 6.

Pulse jet nozzles 22 are also arranged at the casing 2 to blow out pulsated air for backwashing. Apertures 23 are formed in the ceiling plate 6 so as to face the respective centers of the corresponding filter members 17. A nozzle 22 is arranged above each of the apertures 23. The nozzles 22 are connected to a pulsated air supply source (not shown) to inject pulsated air into the inside of the respective filters 7. As a result, a backwashing process is executed to blow off the particulate material adhering to the filter members 17.

A fluidization chamber 24 is formed in the casing 3 so as to operate also as spraying chamber. The nozzles 8 are attached to spray arms 25. Binding liquid or coating liquid is supplied to the nozzles 8 from a pump arranged outside the apparatus by way of a tube (not shown). The arms 25 are slidably fitted to respective columns (not shown) and the nozzles 8 can be vertically and appropriately moved up and down in the casing 3. Note that the arms 25 and the nozzles 8 can be moved to respective positions that do not constitute any obstacle to the operation of lowering the ceiling plate 6 or appropriately removed to the outside of the apparatus by way of windows (not shown). Note that the nozzles 8 may be arranged at the lateral surface so as not to constitute any obstacle to the operation of moving the ceiling plate 6.

Ultrasonic washers 55 are fitted to the lateral wall 3a of the casing 3. Each of the washers 55 is provided with an ultrasonic oscillator, which is connected to an oscillation generator 58 arranged outside the apparatus. Each of the ultrasonic oscillators may be an oscillator for transforming an electric input into mechanical oscillation such as a piezoelectric ceramic element, which is an electric-mechanical transducer. A high frequency signal of about 15 to 50 kHz is input to the ultrasonic oscillators from the oscillation generator 58 and the electric oscillation is transformed into mechanical oscillation before it is output. As washing liquid is injected into the casing 3 and the washers 55 are driven to operate, the washing liquid is oscillated by the high frequency ultrasonic waves emitted from them and the object of washing in the washing liquid is washed by cavitations and micro-oscillation of the washing liquid. Particularly, the filters 7 that are processed to show pleats so as to have a complex profile can effectively and suitably be washed to the bottoms of the pleats by ultrasonic washing.

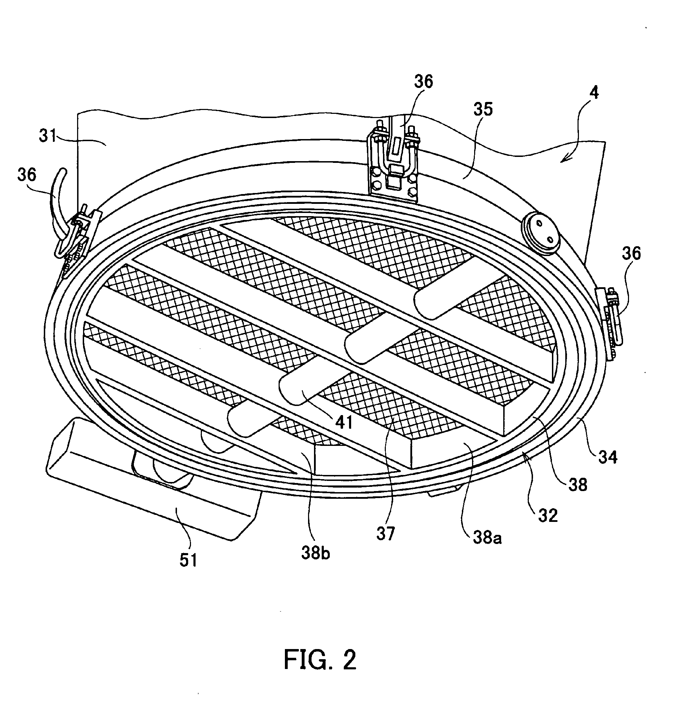

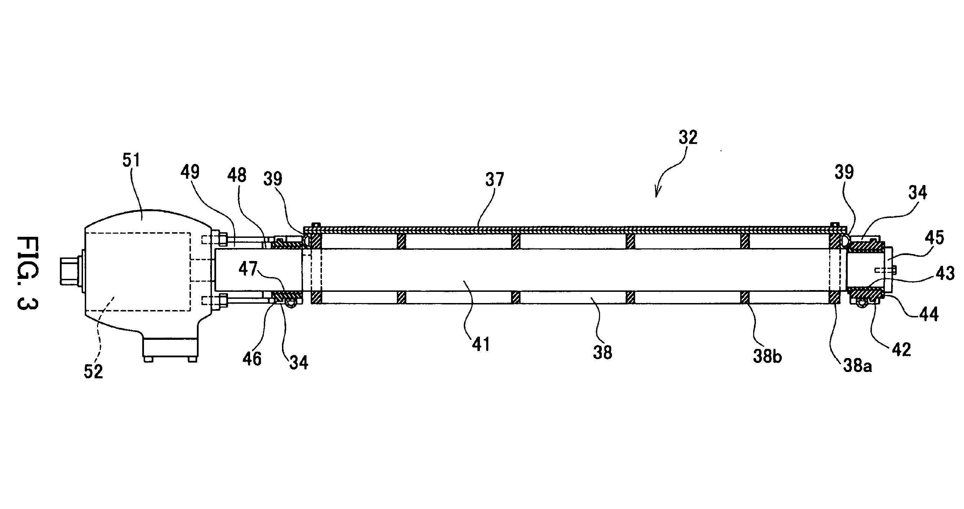

The material container 4 includes a container casing 31 and a screen unit 32 fitted to the lower end of the casing 31. The casing 31 has an inverted circular truncated cone profile with a diameter that diminishes toward the lower end thereof. A material containing chamber 33 is formed in the casing 31. The screen unit 32 includes an annular frame 34 and a perforated plate 9 arranged in the frame 34. The perforated plate 9 has air-permeability and the particulate material put into the containing chamber 33 is supported on the perforated plate 9. FIG. 2 is a schematic perspective view of the material container of the fluidized bed apparatus as viewed from the screen unit 32 side (lower side) thereof and FIG. 3 is a schematic illustration of the screen unit 32 of the fluidized bed apparatus, showing the configuration thereof. As shown in FIG. 2, the screen unit 32 is rigidly secured to the flange section 35 formed at the lower end of the casing 31 by means of toggle cramps 36.

The perforated plate 9 is typically made of folded wire fabric of 42×175-mesh, 32×132-mesh or 24×110-mesh. A porous plate 37 formed by laying a punched plate and a plain woven wire fabric one on the other to reinforce the perforated plate and a support bracket 38 made of stainless steel for supporting the porous plate 37 are fitted to the perforated plate 9. The bracket 38 has a circular outer peripheral section 38a and a plurality of rib sections 38b arranged in parallel with each other in the inside of the outer peripheral section 38a. The air-permeable porous plate 37 is laid on the upper surface of the bracket 38. As shown in FIG. 3, a screen seal 39 is fitted to the entire outer periphery of the outer peripheral section 38a of the bracket 38. As the seal 39 is brought into contact with the inner peripheral surface of the frame 34, the outer periphery of the perforated plate 9 is sealed to prevent the particulate material from falling down and air from leaking into the inside from the outside of the perforated plate.

As shown in FIG. 3, a rotary shaft 41 is fitted to a central part of the bracket 38. The rotary shaft 41 is rotatably supported at the right end side thereof in FIG. 3 (the front side in FIG. 2) by the frame 34 by way of a bush 42. A sleeve 43 made of synthetic resin is arranged between the bush 42 and the rotary shaft 41. A thrust bearing 44 is fitted to the outer end of the sleeve 43. An end cap 45 is fitted to the outer side of the bearing 44.

The rotary shaft 41 is also rotatably supported at the left end thereof by the frame 34 by way of another bush 46. A sleeve 47 made of synthetic resin is arranged between the bush 46 and the rotary shaft 41. A collar 48 is fitted to the outer end of the sleeve 47. A spacer tube 49 is fitted to the outer surface of the collar 48. A motor unit 51 is fitted to the left side of the tube 49 in FIG. 3. The rotary shaft 41 is linked at the left end thereof in FIG. 3 to a motor 52 (drive apparatus) contained in the motor unit 51. The perforated plate 9 is adapted to be driven to rotate around the rotary shaft 41 by the motor 52. It is held to the state illustrated by solid lines in FIG. 1 for a coating process, whereas it is displaced to the state illustrated by a dotted chain line in FIG. 1 for washing the filters.

An air supply unit 5 having an air supply chamber 53 in the inside is installed below the container 4. The unit 5 is connected to an air supply duct 54 that communicates with the air supply chamber 53. The duct 54 is connected to an air supply source (not shown) arranged outside the apparatus. Alternatively, a pneumatic cylinder may be arranged in the air supply chamber 53 to push up the unit 5 and bring it into contact with the container 4 by means of the cylinder. Then, it may be so arranged that the container 4 and the casing 3 and the casings 2 and 3 may be brought into tight contact with each other as the unit 5 is raised.

Air flows into the material containing chamber 33 by way of the perforated plate 9 as fluidizing air is supplied to the air supply chamber 53 from the duct 54 in the fluidized bed apparatus. Then, the particulate material in the chamber 33 is blown up and fluidized in the material containing chamber 33 and the fluidization chamber 24. A process of coating the particulate material is executed as binding liquid or a coating liquid is sprayed onto the material from the nozzles 8 under this condition. It is also possible to subject the processed material to a drying process by stopping the operation of spraying liquid from the nozzles 8 after the process of coating the particulate material.

On the other hand, the air that is used to fluidize the particulate material is cleaned by separating and removing fine solid particles from it by means of the filters 7 and exhausted to the outside by way of the duct 13. The fine particles adhering to the filters 7 are appropriately subjected to a backwashing process by means of the nozzles 22. However, it is difficult to completely blow off the adhering powdery material only by way of a backwashing process. Thus, the filters 7 are washed in the fluidized bed apparatus when a predetermined period of time is spent for a coating process or coating processes. In known fluidized bed apparatus, it is necessary to remove the filters 7 from the apparatus for washing. However, in the fluidized bed apparatus of this embodiment, it is possible to wash the filters 7 in the apparatus, supplying washing water into the casings from the supply pipe 14.

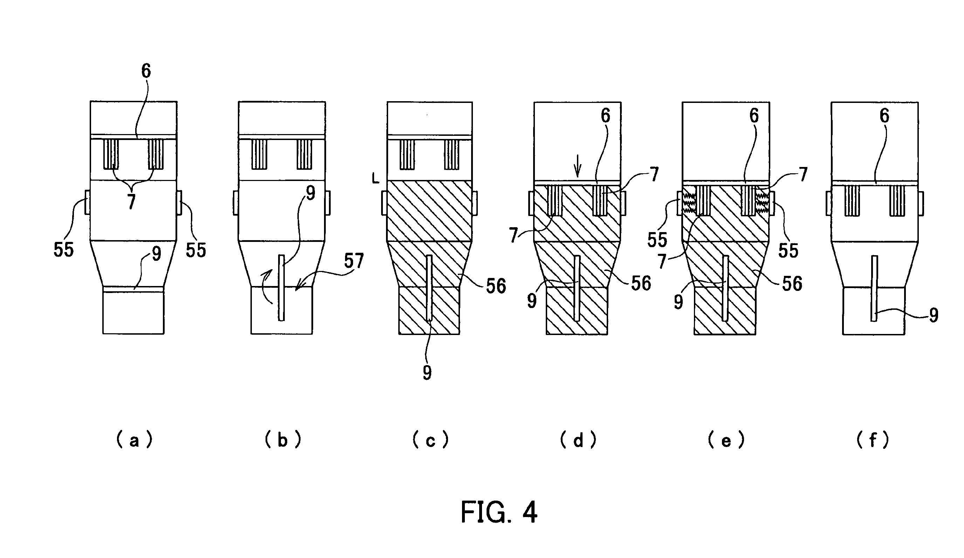

Now, the process of washing the filters 7 of the fluidized bed apparatus of FIG. 1 will be described below. FIGS. 4A through 4F are schematic illustrations of the fluidized bed apparatus of FIG. 1 in different washing steps. When a predetermined period of time is spent for a coating process or coating processes in the fluidized bed apparatus, the product in the inside is taken out and washing liquid 56 is injected into the apparatus by way of the supply pipe 14. At this time, the perforated plate 9 is driven to rotate from the state of FIG. 4A to the state of FIG. 4B before the injection of the washing liquid 56. More specifically, the motor 52 is operated to drive the rotary shaft 41 to rotate by 90° to change the attitude of the perforated plate 9 from the horizontal position of FIG. 4A (the first position) to the vertical position of FIG. 4B (the second position). Then, as a result, a gap is formed between the inner wall of the material container 4 and the outer periphery of the perforated plate 9 and an opening 57 is produced at the bottom of the material container 4. Thus, the fluidization chamber 24 and the material container chamber 33 and the air supply chamber 53 are held in communication with each other by way of the opening 57 in the fluidized bed apparatus. Then, washing liquid 56 is injected into the apparatus from the supply pipe 14.

Warm water, clean water or water containing detergent may be used as washing liquid 56. Washing liquid 56 is injected into the apparatus to predetermined level L as shown in FIG. 4C. After injecting washing liquid 56, the filters 7 are immersed in the washing liquid 56 (FIG. 4D). The filters 7 are lowered with the ceiling plate 6 by operating the wire 15. The ceiling plate 6 is lowered to a position where it is dipped in the washing liquid 56. After immersing the filters 7 in the washing liquid 56, the washers 55 are driven to operate as shown in FIG 4E. At this time, since the washers 55 are located near the respective filters 7 immersed in the washing liquid 56, the ultrasonic oscillation can easily be transmitted to the filters 7 and the foreign objects adhering to the filters 7 such as fine particles can be removed efficiently.

Additionally, since the perforated plate 9 is made to take a vertical position in the processing vessel 1 during the washing process as shown in FIG. 4E, the efficiency and the performance of the process of washing the perforated plate 9 are improved if compared with an arrangement where the washing process is conducted while the perforated plate 9 is held to take a horizontal position. For example, if powder that is insoluble to washing liquid (the component insoluble to washing liquid) is deposited on the perforated plate 9, such powder cannot be removed satisfactorily when the perforated plate 9 is held to take a horizontal position during the washing process. To the contrary, since the perforated plate 9 is made to take a vertical position in the washing process in the fluidized bed apparatus of FIG. 1, the component insoluble to washing liquid is shaken off and removed from the perforated plate 9 by ultrasonic oscillation. In short, any component insoluble to washing liquid is prevented from being deposited on the perforated plate 9 to make it possible to wash the inside of the apparatus efficiently.

As described above, it is now possible to efficiently wash the filters 7 in the apparatus because the washers 55 are fitted to the lateral wall 3a of the casing 3 and the filters 7 are immersed in the washing liquid that fills the inside of the casing 3 so that the filters 7 can be washed by ultrasonic oscillation while the filters 7 are in the immersed condition. In other words, it is no longer necessary to remove the filters 7 from the apparatus and the filters 7 are automatically washed to remarkably reduce the number of man-hour necessary in the washing process. Additionally, the operator is or the operators are not required to touch the solution of chemical agent during the washing process to improve the environment of operation because the filters 7 are washed in the apparatus. Additionally, a fluidized bed apparatus according to the present invention can be realized by installing washers 55 in a conventional fluidized bed apparatus, the present invention is applicable to conventional fluidized bed apparatus without changing the design to a large extent and replacing a number of components.

After operating the washers 55 for a predetermined time period and washing the filters 7, the washing liquid 56 is discharged by opening a cock (not shown), as shown in FIG. 4F, when the washing process ends. However, if necessary, the steps of FIG. 4C through FIG. 4F may be repeated for a given number of times or the washing process may be executed while constantly supplying and discharging water. It is also possible to dry the filters 7 after cleaning them by flowing drying gas into the apparatus from the duct 54.

### [Embodiment 2]

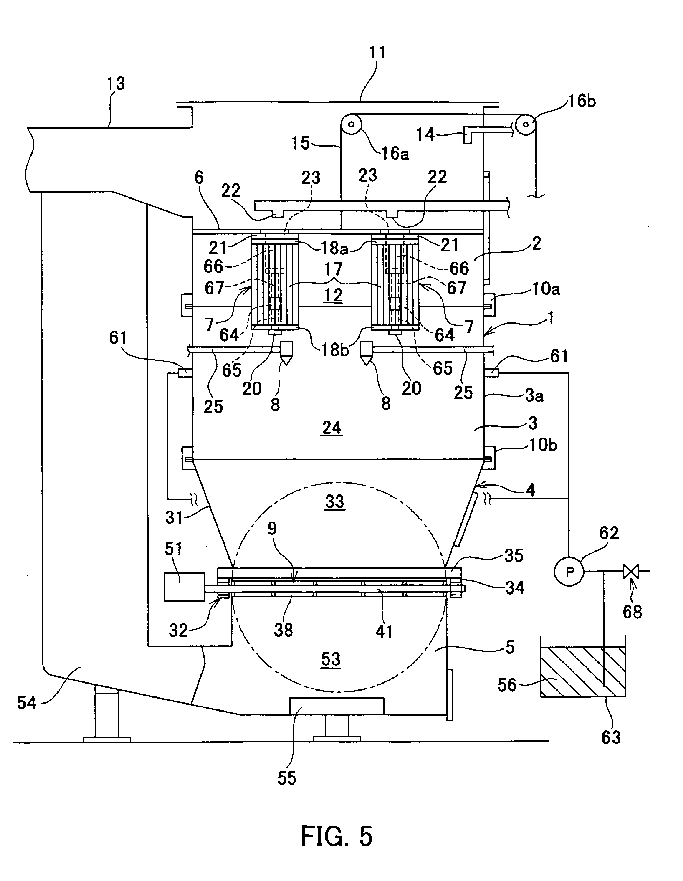

Now, Embodiment 2 of the present invention will be described below. In Embodiment 2, the ultrasonic washers 55 of Embodiment 1 are replaced by bubbling washers 61. FIG. 5 is a schematic illustration of Embodiment 2 of the present invention, which is a fluidized bed apparatus, showing the configuration thereof. The components and the members of Embodiment 2 that are similar to those of Embodiment 1 are denoted respectively by the same reference symbols and will not be described any further.

As shown in FIG. 5, the fluidized bed apparatus is equipped at the lateral wall 3a of the casing 3 with washers 61. Each of the washers 61 has a nozzle (bubble flow injection nozzle) for injecting a liquid flow containing bubbles and is connected to a pump 62 arranged outside the apparatus. The pump 62 is connected to a tank 63 storing washing liquid. Bubble flow injection nozzles that can be used for this embodiment include "Bubbling Jet Nozzle" (trade name) available from Spraying Systems Co., Japan. adapted to take in external air by the effect of a liquid flow and inject fine bubbles as jet flow. Washing liquid is supplied to the bubble flow injection nozzles from the pump 62 under liquid pressure of about 0.1 to 0.5 MPa and air is taken in from air inlet port 68 that is open to the atmosphere by the effect of the liquid flow. Consequently, a liquid flow (bubble flow) including bubbles is injected.

On the other hand, filters 7 are rotatably fitted to the fluidized bed apparatus of Embodiment 2. As shown in FIG. 5, a rotary joint 64 is fitted to the lower end of each of the retainers 19. A filter rotary shaft 65 is fitted to the joint 64. The rotary shaft 65 can freely rotate relative to the retainer 19 by way of the joint 64. A filter anchoring knob 20 is fitted to the lower end of the rotary shaft 65. Thus, each of the filters 7 is rotatably suspended from the ceiling plate 6 by means of a retainer 19, a joint 64, a rotary shaft 65 and a knob 20.

A pair of air cylinders 66 is rigidly secured to the lower surface of the ceiling plate 6. Compressed air is supplied to the air cylinders 66 from a compressor (not shown). As shown in FIG. 5, the air cylinders 66 extend downward from the ceiling plate 6 and lower parts thereof are contained in the respective filters 7. A piston rod 67 projects downward from the lower end of each of the air cylinders 66. A joint 64 is fitted to the lower end of the piston rod 67. FIG. 5 shows a state where the piston rod 67 of the air cylinder 66 is contracted and the rotary shaft 65 is pulled upward. On the other hand, as the air cylinders 66 are operated, the piston rods 67 come to project out from the respective air cylinders 66 and the rotary shafts 65 move down. Then, as a result, the filters 7 move down and the rubber packing rings 21 are released from the ceiling plate 6 to make the filters 7 rotatable. The configuration of the other components of this embodiment is same as that of Embodiment 1.

In the fluidized bed apparatus of FIG. 5, the bubble flow injection nozzle of each of the washers 61 is inclined relative to the lateral wall 3a in such a way that an air bubble flow strikes the filter 7 in a tangential direction in a filter washing process. FIG. 6 is a schematic illustration of a filter washing process of this fluidized bed apparatus. In the fluidized bed apparatus of Embodiment 2, the ceiling plate 6 is lowered and the air cylinders 66 are operated to release the filters 7 from the ceiling plate 6 and make them rotatable in a washing process. Then, as washing liquid is injected into the casing 3 and the washers 61 are operated, the filters 7 are driven to rotate around the respective rotary shafts 65 by the air bubble flows produced from the washers 61, while they are supported by the respective joints 64. As the filters 7 rotate, the fine particles accumulated in the bottoms of the pleats of the filters 7 are driven to move toward the outer periphery by the centrifugal force produced as a result of the revolutions of the filters 7. Thus, the filters 7 are washed not only by the effect of the bubble flows blown into the pleats but also by the centrifugal force produced by the revolutions of the filters 7.

Since the filters 7 are washed while they are driven to rotate by the bubble flows produced by the washers 61 in this fluidized bed apparatus, the bubble flows directly hit the respective filters entirely to consequently wash the bottoms of the pleats. Therefore, it is no longer necessary to remove the filters from the apparatus and the filters are automatically washed to remarkably reduce the number of man-hour necessary in the washing process. Additionally, the operator is or the operators are not required to touch the solution of chemical agent during the washing process to improve the environment of operation because the filters are washed in the apparatus. Additionally, a fluidized bed apparatus according to the present invention can be realized by installing washers 61 in a conventional fluidized bed apparatus, the present invention is easily applicable to conventional fluidized bed apparatus without changing the design to a large extent and replacing a number of components.

The present invention is by no means limited to the above-described embodiments, which may be modified in various different ways without departing from the scope of the present invention.

For example, while the above-described embodiments are designed as fluidized bed apparatus for executing a coating process on particulates, the present invention can also be applied to apparatus for granulating particulates and apparatus for drying particulates. While embodiments comprising ultrasonic washers 55 and those comprising bubbling washers 61 are described above, it is possible to embody the present invention by using both one or more than one ultrasonic washers and one or more than one bubbling washers. In other words, it is possible, for example, to wash one or more than one filters 7 by ultrasonic oscillations of one or more than one ultrasonic washers 55, while driving the one or more than one filters 7 by one or more than one bubble flows produced by one or more than one bubbling washers 61. Furthermore, washers that can be used for the purpose of the present invention are not limited to ultrasonic washers and bubbling washers and include, for instance, in-tank agitation nozzles adapted to strongly inject washing liquid that does not contain any bubbles.

While the ceiling plate 6 is driven to move up and down and the perforated plate 9 is driven to rotate by means of a motor in the above-described embodiments, various other drive means such as actuators comprising a pneumatic cylinder may also be used for the purpose of the present invention. While the filters 7 are moved up and down by means of filter-containing type air cylinders in Embodiment 2, means for moving the filters up and down are not limited to air cylinders and include arrangements for moving up and down filters 7 suspended from the ceiling of the processing vessel 1 by means of a lifting gear arranged at the ceiling section, arrangements for moving up and down filters 7 by means of a winch arranged outside the processing vessel 1 and other arrangements. The perforated plate 9 may be driven to rotate by means of a handle and the like externally fitted to it by hand.

Filters 7 that can be used in a fluidized bed apparatus are not limited to those having a cylindrical profile as described above and include those having a polygonal profile and those having a prism-like profile. Materials that can be used for filters include unwoven fabrics of polyester and polyamide and stainless steel.

Means for driving one or more than one filters 7 up and down in an apparatus according to the invention include arrangements for moving filters up and down with a ceiling plate 6 as described above and also arrangement for moving only filters up and down. Filters may be suspended by a wire so as to be moved up and down or fitted to a support rod and the support rod may be driven to move up and down by means of an actuator such as an air cylinder.

In any of the above-described fluidized bed apparatus, it is possible to execute a washing process by means of the washers 55, while driving the ceiling plate 6 to move up and down, in order to improve the washing effect. One or more than one additional washing nozzles may be arranged to inject washing liquid and wash the inner wall of the fluidization chamber 24.

## Claims

1. A fluidized bed apparatus comprising:
a processing vessel having a cylindrical profile;
a filter member arranged in the processing vessel so as to be immersed in washing liquid to be injected and retained in the processing vessel; and
a washer fitted to the lateral wall of the processing vessel so as to be capable of washing the filter member immersed in the washing liquid.

2. The fluidized bed apparatus according to claim 1, wherein
the washer is an ultrasonic washer for applying an ultrasonic oscillation to the washing liquid.

3. The fluidized bed apparatus according to claim 1, wherein
the washer is a bubbling washer for supplying a bubble flow or liquid containing bubbles to the washing liquid.

4. The fluidized bed apparatus according to claim 3, wherein
the filter is rotatably arranged in the processing vessel so as to be driven to rotate in the washing liquid by the bubble flow or the liquid containing bubbles.

5. The fluidized bed apparatus according to any of claims 1 through 4, wherein
the filter is vertically movably arranged in the processing vessel.

6. The fluidized bed apparatus according to any of claims 1 through 5, wherein
the processing vessel includes a filter casing in which the filter is arranged, a spray casing in which a spray nozzle for spraying liquid to an object of processing is arranged, a material container containing the object of processing and a gas feed unit for feeding processing gas to the material container and the washer is arranged at the lateral wall of the spray casing.

7. The fluidized bed apparatus according to any of claims 1 through 6, further comprising:
a perforated plate arranged in the processing vessel so as to be displaceable between a first position where it is disposed substantially horizontally and a second position where it is inclined by a predetermined angle relative to the first position.

8. A filter washing method in a fluidized bed apparatus including a processing vessel having a cylindrical profile and a filter member arranged in the processing vessel, the method comprising:
injecting washing liquid into the processing vessel;
immersing the filter member in the washing liquid retained in the processing vessel; and
washing the filter member immersed in the washing liquid by means of a washer fitted to the lateral wall of the processing vessel.

9. The filter washing method according to claim 8, wherein
the washer applies an ultrasonic oscillation to the washing liquid to wash the filter member.

10. The filter washing method according to claim 8, wherein
the washer applies a bubble flow to the washing liquid to wash the filter member.

11. The filter washing method according to claim 10, wherein
the filter is driven to rotate in the washing liquid by the bubble flow.

12. The filter washing method according to any of claims 8 through 11, wherein
the filter member is arranged so as to be vertically movable in the processing vessel and moved to a downward position in the processing vessel while washing liquid is injected into and retained in the processing vessel so as to be immersed in the washing liquid.

13. The filter washing method according to any of claims 8 through 12, wherein
a perforated plate is arranged in the processing vessel of the fluidized bed apparatus so as to be displaceable between a first position where it is disposed substantially horizontally and a second position where it is inclined by a predetermined angle relative to the first position and the filter member is washed when the perforated plate is displaced to the second position.
